Europäisches Patentamt

European Patent Office

Office européen des brevets

(19)

(11) **EP 0 566 188 B1**

(12) **FASCICULE DE BREVET EUROPEEN**

(45) Date de publication et mention
de la délivrance du brevet:
**10.12.1997 Bulletin 1997/50**

(51) Int Cl.⁶: **H04N 7/24**

(21) Numéro de dépôt: **93201006.9**

(22) Date de dépôt: **06.04.1993**

(54) **Dispositif de segmentation d'images**

Einrichtung zur Bildsegmentierung

Image segmentation apparatus

(84) Etats contractants désignés:
**DE FR GB**

(30) Priorité: **14.04.1992 FR 9204581**

(43) Date de publication de la demande:
**20.10.1993 Bulletin 1993/42**

(73) Titulaires:
• **LABORATOIRES D'ELECTRONIQUE PHILIPS
S.A.S.
94450 Limeil-Brévannes (FR)**
Etats contractants désignés:
**FR**
• **Philips Electronics N.V.
5621 BA Eindhoven (NL)**
Etats contractants désignés:
**DE GB**

(72) Inventeurs:
• **Riglet, Philippe
F-75008 Paris (FR)**
• **Bouchard, Lionel
F-75008 Paris (FR)**
• **Sirat, Jacques-Ariel
F-75008 Paris (FR)**

(74) Mandataire: **Landousy, Christian et al
Société Civile S.P.I.D.
156, Boulevard Haussmann
75008 Paris (FR)**

(56) Documents cités:
**EP-A- 0 225 729          EP-A- 0 474 304
EP-A- 0 476 603          WO-A-88/09101**

• **SIGNAL PROCESSING. IMAGE
COMMUNICATION vol. 1, no. 2, 31 Octobre 1989,
AMSTERDAM NL pages 153 - 180 GILDE ET AL.
'coding of arbitrarily shaped image segments
based on a generalited orthogonal transform'**
• **ALTA FREQUENZA vol. LVII, no. 10, 31
Décembre 1988, MILANO IT pages 95 - 101
CARONNA ET AL. 'some experiments in
interframe contour coding'**
• **IMAGE COMMUNICATIONS vol. 1, no. 2, 31
Octobre 1989, pages 139 - 152 AIZAWA ET AL
'model-based analysis synthesis image coding
(mbasic) system for a person face'**
• **BR TELECOM TECHNOL J vol. 8, no. 3, 31 Juillet
1990, pages 94 - 106 WELSH ET AL 'model-based
image coding'**
• **IEEE TRANSACTIONS ON ACOUSTICS,SPEECH
AND SIGNAL PROCESSING vol. 37, no. 12, 31
Décembre 1989, NEW YORK US pages 2008 -
2023 FORCHHEIMER ET AL. 'image coding -
from waveforms to animation'**

**Description**

La présente invention concerne un dispositif d'analyse et de traitement d'une séquence d'images comprenant au moins un motif mobile sur un fond fixe ou quasi-fixe et disponibles sous la forme de signaux numériques correspondant aux informations de luminosité ou de couleurs des points d'image ou pixels, comprenant :

(1) des moyens de détermination de la silhouette constituée par la partie animée de ladite séquence, par calcul, à luminance du fond sensiblement égale, d'une différence de luminance entre l'image courante et au moins une image précédente et comparaison de cette différence à un seuil, en vue de la constitution d'une image binaire dont les deux valeurs de luminance possibles correspondant respectivement au fond de l'image et à sa zone utile sont l'une ou l'autre adoptées pour chaque pixel selon la valeur de ladite différence par rapport au seuil ;
(2) des moyens de suppression des irrégularités affectant éventuellement la zone utile ;
(3) des moyens de restitution d'une image de segmentation constituée d'un fond uniforme et de la représentation du motif extrait des images originales à l'aide desdits moyens de détermination de silhouette et desdits moyens de suppression d'irrégularités.

Cette invention est utilisable notamment dans un système de codage d'images visiophoniques, pour l'extraction automatique de la zone utile des images à transmettre et/ou stocker.

La visioconférence, la visioréunion sont des activités au développement actuellement très rapide. Les revues spécialisées font état, en effet, de la présentation ou de la mise sur le marché, par de nombreuses sociétés, de visiophones utilisant des transmissions sur lignes RNIS (Réseau Numérique à Intégration de Services), avec un débit de 48 à 64 kbits/seconde. Ce mode de transmission sur réseau est malheureusement encore réservé à une assez faible clientèle professionnelle, lesdits visiophones ne pouvant être utilisés pour des transmissions sur le réseau téléphonique accessible à tous les particuliers, qui est à très bas débit. Une image numérisée représente en effet une très grande quantité d'informations (une seconde de télévision requiert par exemple un espace de codage d'environ 30 Mo, une image fixe au format CCIR un espace de codage d'environ 1 Mo), qu'il faudrait soumettre à un taux de compression très élevé.

Un des moyens permettant de réduire cette quantité d'informations consiste en un prétraitement des images initiales en vue d'une sélection des données à transmettre (et/ou stocker) les plus utiles. L'article de W.J. Welsh, "Model-based coding of videophone images", paru dans la revue "Electronics and Communication Engineering Journal", février 1991, pp.29-36, propose un prétraitement de ce type. Dans ce document, il est en effet prévu d'isoler dans les images le contour de la tête et des épaules, c'est-à-dire de la partie animée de la séquence d'images, en mettant en oeuvre un algorithme proposé par M. Kass, A. Witkin et D. Terzopoulos dans leur article "Snakes : active contour models", paru dans "Int. J. Comput. Vision", 1988, pp.321-331. Cette mise en oeuvre est cependant relativement complexe, et, par ailleurs, la convergence de l'algorithme, qui procède par approximations devant conduire à une stabilisation au niveau du contour de la tête, n'est pas assurée.

Le document WO-A-8809101 décrit un dispositif d'analyse et de traitement d'images plus simple, permettant d'opérer une distinction entre des données correspondant à une zone d'intérêt mobile (celle de la silhouette d'un interlocuteur) et d'autres correspondant à un fond fixe, par utilisation des principes de la quantification vectorielle. Bien que ce document souligne les possibles imprécisions dans la délimitation du contour entre la silhouette et le fond, le mode de correction proposé pour y remédier fait appel au même outil, la quantification vectorielle, et repose sur des comparaisons et recherches d'erreur entre des vecteurs du dictionnaire de quantification et des blocs d'origine de l'image concernée, c'est-à-dire sur une méthode analytique restant assez complexe elle aussi.

Le but de l'invention est de proposer un dispositif permettant d'opérer de façon plus simple et plus rapide la suppression des irrégularités affectant le contour qui sépare le fond et la zone utile des images.

L'invention concerne à cet effet un dispositif d'analyse et de traitement tel que défini dans le préambule de cette description et qui est en outre caractérisé en ce que lesdits moyens de suppression des irrégularités affectant la zone utile comprennent, avant l'entrée desdits moyens de restitution d'image de segmentation, un circuit de suppression d'irrégularités de contour par délimitation, sur chaque ligne balayée, du segment appartenant à ladite zone utile et d'uniformisation, à l'intérieur dudit segment, de la valeur de luminance à une valeur déterminée, ladite délimitation de segment étant effectuée en prévoyant une corrélation entre la délimitation de segment sur la ligne précédant la ligne courante et l'inclinaison, par rapport à cette ligne courante, du contour entre la zone utile et le fond de l'image.

La structure de dispositif ainsi proposée permet d'atteindre une image de qualité satisfaisante par la simple mise en oeuvre d'un critère géométrique procédant de proche en proche, par corrélation entre lignes successives.

Dans un mode particulier de réalisation, le dispositif proposé est caractérisé en ce que lesdits moyens de restitution d'image de segmentation comprennent un circuit de substitution à ladite image binaire d'une image en nuances de gris ou de couleurs et sans fond et un circuit de suppression des effets du mouvement intervenu entre la première des images prises dans ladite séquence d'images et l'image courante.

Les particularités et avantages de l'invention apparaîtront maintenant de façon plus détaillée dans la description qui suit, faite en référence aux dessins annexés dans lesquels :

- la figure 1 montre un exemple de réalisation d'un sous-ensemble de codage d'images visiophoniques comprenant un dispositif de segmentation d'images selon l'invention, et la figure 2 un exemple de réalisation de ce dispositif de segmentation ;
- la figure 3 est un organigramme résumant les diverses opérations entreprises pour le traitement des images en vue de ladite segmentation ;
- la figure 4 montre les principales zones où vont être localisés des points de référence définissant les formes caractéristiques d'un visage, en vue des opérations de calibration de modèle et de suivi de déplacement décrites plus loin ;
- la figure 5A montre un exemple de modèle tridimensionnel à facettes à partir duquel est réalisée l'adaptation aux images originales, et la figure 5B montre ce même modèle après réalisation de ladite adaptation pour un exemple de visage réel bien déterminé ;
- la figure 6 illustre le fait que chaque facette du modèle tridimensionnel peut être ombrée en fonction de l'éclairement qu'elle est supposé recevoir d'une source de lumière ponctuelle ;
- la figure 7 montre sur un visage les six degrés de liberté selon lesquels vont être décrits les mouvements de ce visage, la figure 8 illustre la méthode de suivi du déplacement de fenêtres placées en des zones caractéristiques du visage, et la figure 9 montre ledit visage dans le cas particulier où trois fenêtres séparées sont retenues pour subir un codage spécifique ;
- la figure 10 montre dans la séquence des images d'origine à coder, un groupe d'images, et met en évidence la façon dont ces images sont obtenues par prédiction les unes en fonction des autres ;
- les figures 11, 12, 13 montrent trois exemples de zones de transition entre lesdites fenêtres et le reste de l'image à coder ;
- la figure 14 est une représentation du modèle tridimensionnel vu de profil, et montre plus particulièrement deux zones de ce modèle qui ont été partiellement ou totalement exclues de la calibration initiale.

Un visiophone est un appareil permettant aux interlocuteurs d'une communication téléphonique d'obtenir en outre sur un écran l'image animée de leur(s) correspondant(s). Deux types d'information doivent pouvoir être reconnaissables sur l'écran, à savoir le personnage et le fond. Dans l'exemple de réalisation ici décrit, on suppose que les images à transmettre sont constituées d'un personnage animé et d'un fond fixe (ou quasi-fixe, en appelant ainsi un fond qui par exemple a subi un recalage d'image). En outre, le format desdites images est ici du type défini par le CCITT (Consultative Committee for International Telephony and Telegraph) comme format d'image standard pour une transmission sur des réseaux à très bas débit, à savoir le CIF (Common Intermediate Format), adopté pour les applications de téléphonie visuelle et de visioconférence afin de remédier à l'incompatibilité actuelle des standards de télévision dans le monde.

Avec le format CIF, le signal de luminance comprend 288 lignes de 360 pixels chacune, et le signal de chrominance 144 lignes de 180 pixels chacune. Une image vidéo CIF est donc composée de 155520 pixels. Avec un affichage qui serait par exemple de 15 images par seconde, il faudrait donc transmettre 2332800 pixels, codés chacun sur 8 bits. La vitesse de transmission pour le transfert d'une image CIF s'élève donc à plus de 18 Mb par seconde, ce qui ne constitue pas précisément un bas débit et implique de faire impérativement appel à une compression de données. Alternativement, un deuxième format d'image a été défini pour permettre la mise au point d'équipements meilleur marché. Désigné par le sigle QCIF (Quart de CIF), ce format divise par deux la définition des informations de luminance (comprenant maintenant 144 lignes de 180 pixels chacune) et des informations de chrominance (comprenant maintenant 72 lignes de 90 pixels chacune), avec une fréquence d'affichage de 7,5 images par seconde. Dans la suite de la description, on précisera certains résultats ou certaines valeurs soit dans le standard CIF, soit dans le standard QCIF soit encore dans un troisième format, par exemple 682 x 512 pixels (format 4/3). Cependant, les formats ainsi envisagés ne constituent pas des exemples limitatifs en ce qui concerne la présente invention (le format 4/3 de la télévision, de 720 x 576 pixels, pourrait bien entendu aussi être envisagé). Par ailleurs, il semble également qu'une fréquence de 10 images par seconde constitue encore un compromis satisfaisant entre le confort visuel des interlocuteurs et la réduction indispensable du débit.

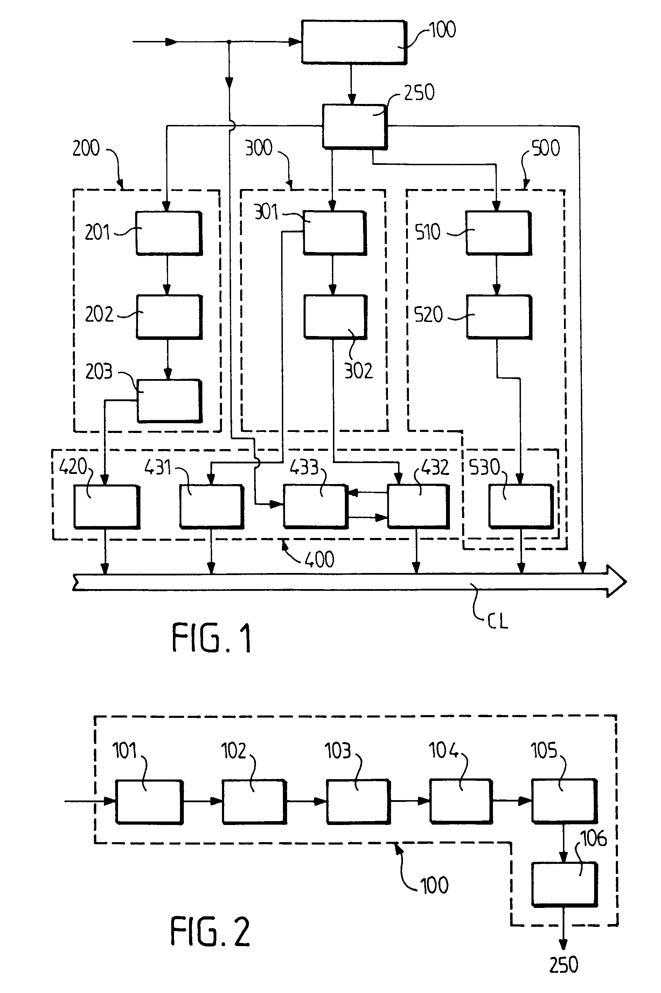

La suite de la description concerne ici un ensemble de codage et de décodage d'images destinées à une telle transmission à très bas débit et/ou à un stockage avec un taux de compression élevé des données correspondant à ces images, ledit ensemble comprenant d'une part un sous-ensemble de codage d'images visiophoniques et d'autre part un sous-ensemble de décodage d'images ainsi codées. Le sous-ensemble de codage d'images visiophoniques ici décrit en référence à la figure 1 reçoit sur son entrée une séquence d'images vidéo telles que définies ci-dessus. Ces images ont par exemple été obtenues à l'aide d'une caméra CCD, avec un format de 512 x 512 éléments d'image (ou pixels) à l'origine. Cette caméra délivre ici un signal en teintes de gris sur 256 niveaux (pixels codés sur 8 bits), mais on pourrait aussi traiter des images en couleurs et avec un format différent.

La séquence d'images au format CIF ainsi présente à l'entrée du sous-ensemble est fournie à un dispositif de segmentation 100. Dans l'exemple ici décrit, il s'agit d'extraire automatiquement du fond immobile la zone correspondant au visage de l'interlocuteur (et au haut du buste). Cette extraction repose sur l'analyse d'une succession d'images, par exemple entre une dizaine et une vingtaine, dont on retient ici un nombre n, par exemple les images de rang 4, 8, 12 et 16, notées respectivement $I_1$, $I_2$, $I_3$, $I_4$ (dans cette succession, les images retenues doivent être suffisamment espacées pour capter au mieux les déplacements, mais pas trop pour éviter un surdimensionnement de la silhouette dans le cas de déplacements importants). Comme le montre la figure 2, le dispositif 100 comprend tout d'abord un circuit 101 de détermination de silhouette par un calcul de la différence (ici pixel par pixel) entre ces images, selon la formule suivante pour obtenir une différence moyenne permettant de tenir compte de fluctuations dans les mouvements de la tête et du buste :

$$DIFF(i,j) = \left| I_4(i,j) - I_3(i,j) \right|$$

$$+ \left| I_4(i,j) - I_2(i,j) \right|$$

$$+ \left| I_4(i,j) - I_1(i,j) \right|$$

expression dans laquelle i et j correspondent au rang du pixel courant dans les lignes et les colonnes, $|$ . $|$ désigne l'opérateur "valeur absolue de", et DIFF est la différence moyenne ainsi calculée. Cette différence est alors comparée à un seuil THRE1 (de quelques unités, par exemple 4) pour séparer le signal utile du bruit de fond : si la différence est supérieure au seuil, on prend DIFF(i,j) = 255 (maximum de l'échelle des 256 niveaux de luminance variant de 0 à 255), le pixel correspondant étant considéré comme étant en mouvement dans la succession d'images considérée et donc comme appartenant au personnage, sinon le pixel courant est considéré comme statique et on lui associe alors une luminance nulle DIFF(i,j) = 0. Ce calcul de différence, par suppression du fond basée sur le mouvement, implique bien entendu que la luminance ambiante, correspondant au fond, reste constante pendant cette succession d'images, faute de quoi une variation de luminance pourrait être confondue avec un mouvement réel.

Le circuit 101 est suivi d'un circuit 102 de suppression de bruit. En effet, au cours de la détermination de silhouette, il peut subsister de petites variations de luminosité du fond, affectant quelques pixels isolés situés hors de la zone du visage. Le circuit 102 permet alors, en examinant pour chaque pixel P de l'image la luminance des pixels voisins contenus par exemple dans un bloc centré sur ce pixel P, d'effectuer une moyenne sur ce voisinage de P : si les pixels du bloc sont en majorité blancs, on donne à P le niveau de luminance 255, sinon sa luminance est considérée comme égale à 0. Cette opération est représentée par l'expression suivante :

- si

$$\Sigma \, DIFF(k,l) > THRE2$$

$$\Rightarrow \Sigma \, DIFF(k,l) = 255$$

- si

$$\Sigma \, DIFF(k,l) < THRE2$$

$$\Rightarrow \Sigma \, DIFF(k,l) = 0$$

expression dans laquelle les lettres k, l correspondent respectivement au rang des lignes et des colonnes des pixels du voisinage de P(i,j) et THRE2 est la valeur de seuil qui permet de prendre la décision majoritaire après réalisation de la moyenne des luminances. Lorsque ladite opération est terminée, la zone correspondant au fond est remplie de pixels noirs, tandis que celle correspondant au personnage est majoritairement remplie de pixels blancs.

Un circuit 103 de suppression de discontinuités permet ensuite de rendre homogène la silhouette du personnage en éliminant les pixels noirs éventuels qui lui sont intérieurs. Cette suppression est par exemple réalisée en balayant ligne par ligne l'image et en déterminant pour chaque ligne le segment dont les deux extrémités coïncident avec les deux contours gauche et droit du personnage, puis en donnant la valeur de luminance 255 à tous les pixels de ce segment. La zone qui apparaîtra ainsi en blanc doit présenter un profil continu. On veille donc à éliminer, parmi les points d'extrémité de ces segments, ceux qui introduiraient une discontinuité dans ce profil. Plus précisément, si l'on appelle respectivement $P_L(i,j)$ et $P_R(i,j)$ les extrémités du segment pour la ligne courante, c'est-à-dire le premier pixel blanc et le dernier pixel blanc rencontrés sur la ligne courante balayée (c'est-à-dire encore, de façon équivalente, le premier pixel rencontré sur cette ligne à partir de la gauche et à partir de la droite de l'écran respectivement), cette suppression des points aberrants qui engendrent des discontinuités est effectuée en tenant compte de l'inclinaison plus ou moins grande du contour de la silhouette du personnage par rapport à ladite ligne courante, par un test des discontinuités entre la ligne précédente j-1 et la ligne courante j. Cette opération peut être exprimée de la façon suivante : selon que la différence de luminance entre les pixels $P_L$ (ou respectivement $P_R$) de rang j-1 et j est supérieure ou inférieure à un seuil prédéterminé THRE3, le point $P_L$ (ou $P_R$ respectivement) est considéré comme non valide et éliminé (luminance forcée à la valeur 0) ou au contraire comme valide, et l'on passe alors au test similaire pour les lignes j et j+1.

Le seuil THRE3 désigne la valeur de discontinuité tolérée entre deux lignes successives de la zone du personnage. Cette valeur dépend de la région considérée le long du contour de la silhouette :

- lorsque le profil est très arrondi (haut de la tête) et que ladite inclinaison correspond donc à un angle faible ou au contraire voisin de 180°, on peut accepter d'une ligne à l'autre des discontinuités assez élevées, et l'on prendra par exemple pour THRE3 une valeur de l'ordre de quelques dizaines de pixels ;
- au milieu de l'image, dans la région qui correspond aux tempes, aux joues et au cou, cette inclinaison est voisine de 90°, ou en tout cas éloignée des valeurs extrêmes 0 ou 180°, et les discontinuités d'une ligne à l'autre sont faibles, la valeur de THRE3 étant alors de l'ordre de quelques pixels ;
- pour le bas de l'image, dans la région des épaules et du buste, l'inclinaison peut retrouver les valeurs extrêmes signalées et de fortes discontinuités entre lignes successives, de l'ordre de plusieurs dizaines de pixels, existent à nouveau.

Aux circuits 102 et 103 est enfin associé, pour une opération de lissage, un circuit 104 de suppression des irrégularités du contour séparant la silhouette du fond. Là encore, divers modes de suppression pourraient être envisagés, et par exemple un filtrage morphologique. Comme pour le circuit 102, on a ici choisi d'effectuer une moyenne et une comparaison à un seuil de luminance THRE4, plus précisément en considérant chaque pixel blanc peu éloigné du contour, en testant la luminance de ses voisins, et en lui associant la luminance majoritaire dans ledit voisinage.

Après ces opérations successives de suppression d'irrégularités affectant éventuellement le fond, la silhouette, et le contour les séparant, la segmentation d'image est effective et l'on dispose désormais d'une image binaire, à chaque pixel P(i,j) de laquelle correspond une valeur de l'expression DIFF(i,j). Cette image binaire est alors utilisée par un circuit 105 de substitution d'image pour définir en teintes de gris (ou le cas échéant en couleurs) l'image de la zone du personnage. Cette définition est réalisée de la façon suivante : si DIFF(i,j) = 255, alors l'image originale est recopiée à la place de l'image binaire, sinon, pour tout pixel où DIFF(i,j) = 0, le fond est mis à la valeur 0.

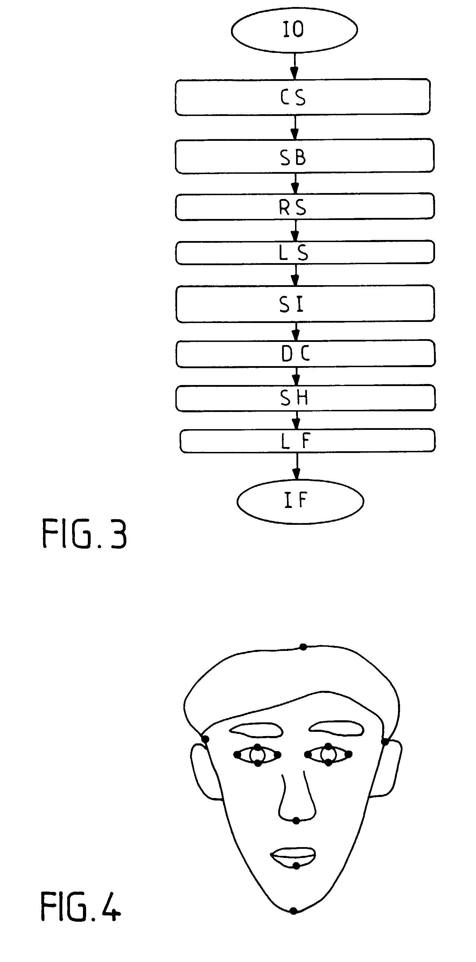

Sur cette image en nuances (teintes de gris, ou couleurs) et sans fond est enfin effectué un dernier traitement, à l'aide d'un circuit 106 de suppression des effets du mouvement. En effet, puisque l'on superpose l'image originale à une image différence résultant de la prise en compte de plusieurs images de la séquence des images d'entrée, il apparaît entre cette image originale et ladite image différence (nécessairement plus large) une sorte de halo, ou de surdimensionnement, dont l'épaisseur correspond aux mouvements effectués par le personnage pendant la prise de vues correspondant à la succession d'images utilisée pour les traitements précédents. Pour éliminer ce halo, le circuit 106 comprend un détecteur de contour qui va faire apparaître à la fois le bord extérieur du halo (c'est-à-dire le contour de l'image sans fond) et son bord intérieur (c'est-à-dire le véritable contour du personnage). Ce détecteur du circuit 106 détecte pour chaque ligne successivement balayée deux points de contour du côté gauche du personnage et deux autres points de contour de son côté droit, et l'on associe alors une luminance nulle aux pixels compris entre ces deux points de contour gauche ainsi qu'aux pixels compris entre ces deux points de contour droit. On dispose ainsi, cette fois, après un éventuel dernier lissage, d'une image donnant le profil réel du personnage. La figure 3 montre un organigramme qui rassemble les opérations ici successivement réalisées pour l'extraction du personnage du fond, ces opérations intermédiaires étant, à partir de chaque image originale IO, les suivantes : création de la silhouette par différence entre plusieurs images (CS), suppression du bruit (SB), remplissage de la silhouette (RS), lissage de celle-ci (LS), segmentation de l'image sans fond (SI), détection de contour (DC), suppression du halo (SH), et lissage final (LF) fournissant l'image sans fond IF.

Dans le système décrit, il est également prévu, en parallèle, un dispositif 200 de construction d'un modèle tridimensionnel du contenu de la zone utile de l'image et un dispositif 300 de réactualisation des paramètres principaux de définition dudit modèle, puis un dispositif 400 de codage des informations délivrées par les dispositifs 200 et 300. Le dispositif 200 est destiné, dans le cadre de l'application ici décrite qui consiste à localiser et suivre un personnage dans une séquence animée d'images visiophoniques, à permettre une calibration initiale par adaptation d'un modèle tridimensionnel de base. Le dispositif 300 permet alors de réactualiser ce modèle pour prendre en compte les mouvements qui interviennent au cours de ladite séquence. Un commutateur 250, dont on verra plus loin le fonctionnement, est prévu en sortie du dispositif 100 pour commander le passage du fonctionnement du dispositif 200 au fonctionnement du dispositif 300.

Le dispositif 200, qui reçoit comme informations des signaux vidéo numériques correspondant à la partie animée d'une séquence d'images et sélectionnés par segmentation, par exemple selon le principe de segmentation décrit ci-dessus, comprend tout d'abord un circuit 201 d'extraction de points de référence dans ladite zone utile des images à transmettre. En effet, pour une reproduction fidèle ou en tout cas satisfaisante du visage du personnage occupant ladite zone utile à partir d'un modèle géométrique tridimensionnel, il est important de déterminer préalablement les principaux points caractéristiques du visage présent dans la séquence d'images (à savoir, comme le montre la figure 4, le sommet de la tête, les tempes, les yeux, le nez, la bouche, et le menton), qui vont permettre la calibration initiale du modèle tridimensionnel (puis un suivi de déplacement, comme on le verra plus loin). Le document "Model-based analysis synthesis image coding (MBASIC) system for a person's face", K. Aizawa et al, Signal Processing : Image Communication, 1 (1989), pp.139-152, décrit un exemple de réalisation d'une telle opération visant à la synthèse ultérieure d'une image de sortie à partir d'un modèle tridimensionnel.

Pour cette extraction de points de référence, le circuit 201 considère donc l'image dans laquelle le fond a été supprimé et effectue ici un balayage, par exemple vertical, de cette image pour déterminer le premier point caractéristique, qui est le sommet de la tête et dont l'ordonnée correspond au maximum en ordonnée de l'image sans fond. Les points caractéristiques des yeux (coins des yeux, point haut, point bas) sont ensuite déterminés par segmentation dans une fenêtre centrée automatiquement sur la zone des yeux, et définie à cet effet à partir notamment de la position du sommet de la tête et en tenant compte de l'épaisseur des cheveux, très variable d'un personnage à l'autre, pour bien placer cette fenêtre au-dessous de la zone correspondant aux cheveux et la centrer effectivement au niveau des yeux.

La méthode de segmentation repose sur un seuillage à plusieurs niveaux, les seuils choisis étant égaux aux minima de l'histogramme de luminance dans la fenêtre. Plus précisément, il faut d'abord réaliser une première opération, qui consiste à déterminer les extrémités de la région correspondant aux cheveux en segmentant par la méthode de l'histogramme une fenêtre dont le bord supérieur est donné par le sommet de la tête, le nombre de niveaux de l'histogramme étant ajusté de façon que la luminance des cheveux apparaisse comme constante et que cette zone des cheveux n'apparaisse donc que comme une seule région. La limite inférieure de la région des cheveux peut alors être choisie comme référence pour définir à son tour la fenêtre des yeux. S'il n'y a pas de détection de cheveux (cas d'un homme chauve), on peut définir une position probable de la fenêtre des yeux par la seule position du sommet de la tête, en choisissant alors une fenêtre de taille suffisante. La fenêtre des yeux étant ainsi définie, la seconde opération consiste à la segmenter en régions, toujours par la méthode de l'histogramme, afin de mettre en évidence la zone des yeux proprement dite, qui est plus contrastée que la peau (ceci suppose bien entendu que les conditions d'éclairage du personnage soient suffisamment correctes pour qu'il n'y ait pas d'ombres susceptibles de fausser la segmentation). Le nombre de niveaux de l'histogramme est alors ajusté automatiquement de façon à pouvoir localiser les quatre points caractéristiques de chaque oeil, dont les coordonnées sont fournies en recherchant les extrema en abscisse et en ordonnée de la forme obtenue après segmentation. On peut aussi ajouter à cette localisation des yeux une localisation des tempes, ce qui désigne ici les deux points appartenant aux contours extérieurs gauche et droit du personnage, à une ordonnée choisie approximativement au niveau des sourcils (ce qui d'ailleurs peut aussi correspondre sensiblement à l'ordonnée des points caractéristiques supérieurs des yeux), l'abscisse correspondante étant déterminée par les points de contour extérieur de l'image sans fond, en balayant la ligne correspondant à cette ordonnée.

A partir de la localisation des yeux, une fenêtre de recherche de la bouche est définie, par translation de celle contenant les yeux. Si le contraste autour de la bouche est faible, on utilise de préférence à la méthode de segmentation, relativement peu précise dans ce cas, une méthode de détection de contours permettant d'obtenir la forme générale de la bouche et de localiser un point caractéristique situé au minimum du contour représentant la lèvre inférieure. De la localisation des yeux et de la bouche, on peut ensuite déduire une fenêtre de recherche du nez, dont les bords latéraux sont sensiblement à la verticale du point intérieur des yeux et dont les bords inférieur et supérieur jouxtent ceux des fenêtres relatives aux yeux et à la bouche, puis, en supposant que le visage du personnage est orienté vers la caméra avec un éclairage ne créant pas d'ombres perturbatrices, déduire par segmentation de cette fenêtre du nez la position des narines, en balayant horizontalement cette fenêtre.

On peut enfin définir une fenêtre de recherche du menton par translation de celle de la bouche. Là encore, le contraste autour du menton peut être faible et l'on préfère à la méthode de segmentation ou à celle de détection de contours, une méthode similaire à celle de détermination de la silhouette utilisée initialement, opérant par obtention d'une image de différence à partir de plusieurs images de la séquence, suppression du bruit, et balayage horizontal pour déterminer le minimum de l'arc obtenu qui correspond au bas du menton.

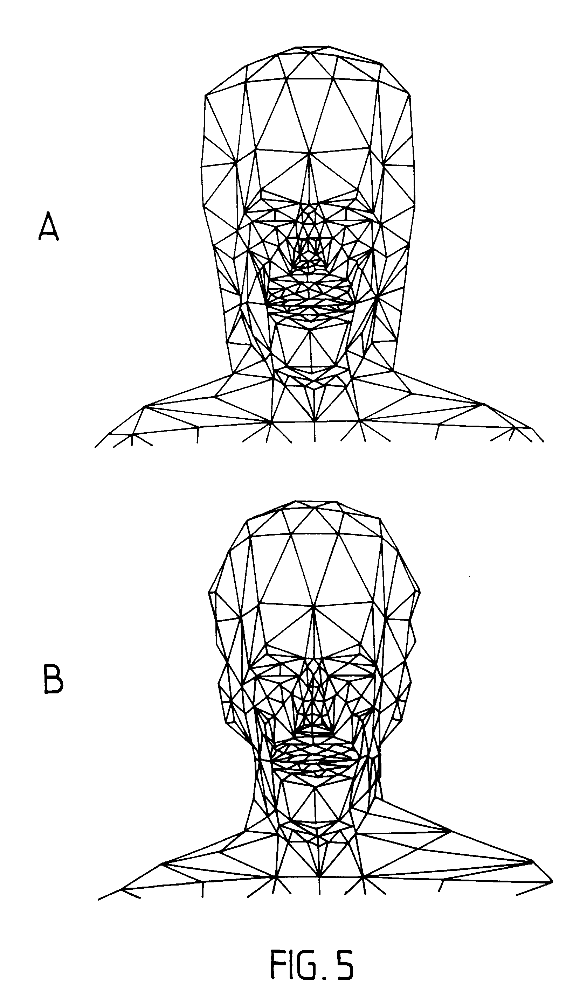

Le circuit 201 d'extraction de points de référence est alors suivi de moyens 202 d'adaptation d'un modèle tridimensionnel de base. Ce modèle, comme indiqué dans le document "Signal Processing : Image Communication" déjà cité, est constitué d'un maillage de nombreuses facettes triangulaires. Chacune de ces facettes est décrite, pour les distinguer, par un numéro de facette FN et trois noeuds de numéros V1, V2, V3 situés aux trois sommets du triangle. Les coordonnées $x_v$, $y_v$, $z_v$ associées à ces noeuds sont définies dans un référentiel lié au modèle. Un exemple d'un tel modèle de base est représenté sur la figure 5A, la figure 5B montrant ce même modèle après réalisation de l'adaptation à un visage réel bien déterminé.

Ce modèle est affiché à l'écran dans un système de coordonnées d'écran $x_s$, $y_s$, $z_s$ où l'axe des abscisses est horizontal, l'axe des ordonnées vertical, et l'axe des z perpendiculaire à l'écran (ces coordonnées $x_s$, $y_s$, $z_x$ sont déduites des coordonnées $x_v$, $y_v$, $z_v$ par une transformation matricielle de type classique), et doit être adapté à la séquence d'images, c'est-à-dire que lesdites coordonnées vont être modifiées à partir des points caractéristiques définis précédemment. Les moyens d'adaptation prévus comprennent d'abord un circuit 202 d'alignement sur l'image originale et de mise à échelle. Les repères pour ledit alignement sont ici, horizontalement, le centre du segment joignant les deux tempes et, verticalement, le sommet de la tête. Les déplacements pour aligner le modèle sur l'image originale sont donc :

(a) en abscisse :

$$dx=\frac{1}{2}[(x_v(RT)-x_v(LT))-x_c(RT)-(x_c(LT))]$$

(b) en ordonnée :

$$dy = y_v(HT) - y_c(HT)$$

expressions dans lesquelles :

-    $x_v$ et $y_v$ ont déjà été définis ;
-    RT et LT se réfèrent à la tempe droite et la tempe gauche respectivement, et HT au sommet de la tête ;
-    $x_c$ et $y_c$ désignent les coordonnées du point caractéristique considéré parmi ceux définis précédemment.

Après alignement, le modèle est dilaté pour être représenté à la même échelle que le personnage, en utilisant pour cela les points caractéristiques des tempes, des yeux et du menton, conformément aux expressions suivantes :

$$DIL(X) = (x_c(RT) - x_c(LT))/(x_v(RT) - x_v(LT))$$

$$DIL(Y) = (y_c(CH) - y_c(EY))/(y_v(CH) - y_v(EY))$$

expressions dans lesquelles DIL(X) et DIL(Y) désignent les facteurs multiplicatifs à appliquer aux coordonnées du modèle, et CH et EY se réfèrent respectivement au menton et aux yeux. Eventuellement, $y_c(EY)$ peut être remplacé par une valeur $y_{cm}(EY)$ qui représente la valeur moyenne des coordonnées $y_c(EY)$ pour différents points caractéristiques choisis autour des yeux. En effet, en prenant une valeur moyenne au lieu de la coordonnée d'un seul point, on minimise l'erreur possible sur l'ordonnée d'un de ces points caractéristiques considéré isolément.

Le circuit 202 est alors suivi d'un circuit 203 d'ajustement des zones d'expression et des profils. En effet, l'alignement et la mise à échelle ont conduit à établir entre le modèle et l'image une correspondance qui reste assez approximative puisque seule la position de quelques points a été déterminée. Pour restituer également les zones expressives et les profils du visage, tous les noeuds du modèle tridimensionnel doivent être ajustés pour décrire au mieux l'image originale. Pour chaque noeud $V_i$, le modèle tridimensionnel comporte donc non seulement des coordonnées $x_{vi}$, $y_{vi}$, $z_{vi}$ mais aussi un numéro ou label qui indique à quelle zone du visage ou du buste appartient ledit noeud (côté de la tête, joues, épaules, nez, yeux, bouche, etc...). Selon la zone, on peut en effet envisager pour chacun de ces noeuds un traitement spécifique :

(a) profil extérieur, côtés de la tête, joues et épaules : ces noeuds sont ajustés sur le contour extérieur de l'image sans fond déterminée précédemment. Ainsi, à chaque noeud du profil extérieur du modèle tridimensionnel doit correspondre un déplacement DEPL(x) le long de l'axe x, à partir duquel on déduit une nouvelle coordonnée $x_v$ pour le noeud $V_i$. Pour les noeuds du côté de la tête, on effectue sur des rangées de pixels voisines du profil extérieur le même type d'alignement, avec en outre un léger décrochement SMSH($V_i$) propre à chaque noeud et qui tient compte de la courbure de la tête ainsi que d'une forme approximative des oreilles. On en déduit alors la

nouvelle coordonnée $x_v$ du noeud $V_i$ concerné. Le déplacement DEPL(.) est donné par l'expression :

$$DEPL\ (x(V_i)) = x_{CTR}\ (y_s(V_i)) - x_s(V_i) + SMSH(V_i)$$

où $x_{CTR}$(.) représente, pour l'ordonnée correspondant au noeud $V_i$, l'abscisse du contour de l'image sans fond et $x_s(V_i)$ l'abscisse $x_s$ pour le noeud $V_i$. Une procédure similaire est utilisée pour les noeuds des joues et des épaules. (b) nez, yeux et bouche : ces noeuds sont ajustés en effectuant leur alignement global par rapport aux points caractéristiques respectifs, selon les expressions suivantes :

$$DEPL(y(NN)) = y_{cl}(NN) - y_s(NN)$$

$$DEPL(y(BM)) = y_{cl}(BM) - y_s(BM)$$

$$DEPL(y(YE)) = y_{cl}(YE) - y_s(YE)$$

où DEPL(.) désigne le déplacement de noeud correspondant au nez (NN), à la bouche (BM), ou aux yeux (YE), $Y_{cl}$(.) désigne l'ordonnée du point caractéristique ainsi concerné, et $y_s$(.) désigne, toujours pour le nez, la bouche ou les yeux respectivement, la coordonnée écran du point correspondant pour le modèle tridimensionnel. On effectue ensuite, pour le nez, la bouche ou les yeux, une translation globale définie par ledit déplacement respectivement, et l'on en déduit la nouvelle coordonnée $y_v$ du noeud $V_i$ concerné.

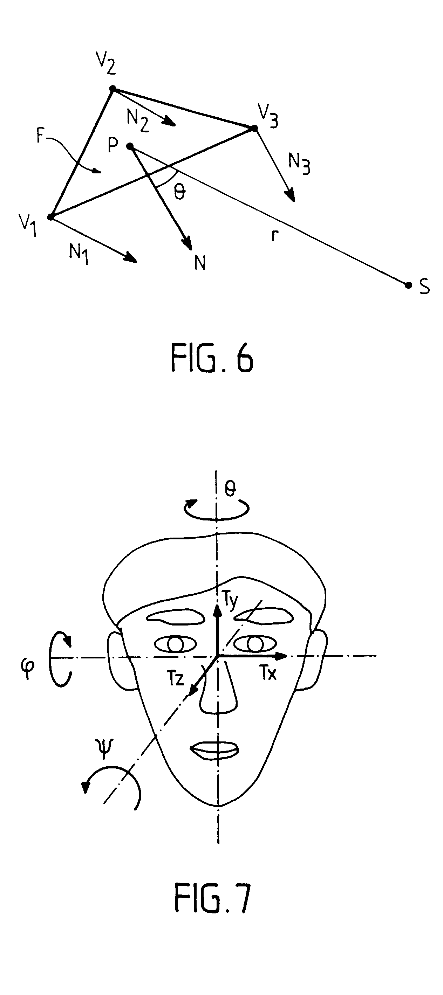

On peut encore perfectionner cet ajustement du modèle tridimensionnel en lui ajoutant un ombrage. On suppose par exemple pour cela qu'un éclairement est fourni par une source ponctuelle de lumière S (voir la figure 6) placée à une distance r de la facette F que l'on veut ombrer (de sommets $V_1$, $V_2$, $V_3$), et que cet éclairement va être variable selon l'orientation des facettes par rapport à la direction de la source. Si l'on appelle I(AMB) la valeur de l'éclairage ambiant de la scène et I(INC) la valeur de luminance en provenance directe de la source, la valeur de la luminance I (OMB) en un point P quelconque de coordonnées (x,y) de la facette F concernée est alors donnée par la relation suivante :

$$I(OMB)(x,y) = I(AMB) + (I(INC)/r).\cos\ \theta$$

où, comme indiqué sur la figure 6, l'angle $\theta$ désigne celui que fait le segment PS avec la normale N à la facette. Afin de garantir une continuité de la luminance entre les facettes, on peut d'ailleurs définir artificiellement cette normale N, de la façon suivante : on commence par définir, en chaque sommet $V_1$, $V_2$, $V_3$ de la facette F considérée, une normale qui est la moyenne des normales, en ces sommets, aux facettes adjacentes à F, puis on calcule la normale à F en un point quelconque de F par interpolation des trois normales $N_1$, $N_2$, $N_3$, ainsi définies en chaque sommet.

Le dispositif de codage 400 présent en sortie des dispositifs 200 et 300 comprend, comme on le verra, divers sous-ensembles de codage, mais tout d'abord un circuit 420 de codage des diverses informations disponibles en sortie du circuit d'ajustement 203, à savoir les nouvelles coordonnées des noeuds du modèle tridimensionnel et des grandeurs dites coefficients de texture et attachées à chaque facette F. Si l'image de synthèse que l'on veut obtenir tient compte de l'ombrage, elle est alors définie, pour chaque facette, à partir du produit du coefficient de texture correspondant par le coefficient d'ombrage lié à ladite facette, ce qui se traduit par l'expression suivante :

$$I(SYNTH)_F = I_{OMB}\ (F)\ x\ CT(F)$$

le coefficient de texture CT(F) pour la facette F étant lui-même déterminé lors de la calibration initiale à partir de l'image originale $I(SOURCE)_F$ vue de face :

$$CT(F) = I(SOURCE)_F/I_{OMB}(F)$$

Ceci dans le cas où la réalisation du sous-ensemble de codage est telle que ce dernier est prévu pour transmettre au sous-ensemble de décodage un tableau regroupant tous les coefficients de texture (calculés comme indiqué ci-dessus) pour toutes les facettes, ledit sous-ensemble de décodage reconstruisant alors l'image de synthèse selon l'expression ci-dessus, en considérant successivement la luminance de chaque point. Ainsi, pour coder une séquence de plusieurs images, il suffit de transmettre une seule fois le tableau de coefficients de texture correspondant à la première image. Ensuite, au cours du mouvement du personnage, les déplacements du modèle entraînent des déformations des facettes qui constituent ce modèle, mais la texture de ces facettes est calculée par interpolation des valeurs initiales des coefficients de texture.

Une autre réalisation du sous-ensemble de codage est possible, dans laquelle on ne transmet pas ce tableau des coefficients de texture, mais simplement la partie d'image originale correspondante, codée par exemple selon un standard vidéo numérique de type JPEG -Joint Photographic Experts Group- qui est adapté à la compression et au codage de données appartenant à des images fixes. Ce standard, décrit dans de nombreux documents, et par exemple dans l'article "Video compression makes big gains", paru dans la revue IEEE Spectrum, octobre 1991, vol.28, n°10, pp. 16-19, prévoit que chaque composante vidéo de l'image est divisée en blocs qui sont alors transformés, selon une transformation orthogonale de type DCT (transformation cosinus discrète, en anglais Discrete Cosinus Transform) en coefficients représentatifs du contenu en fréquence de ces blocs, et eux-mêmes quantifiés puis codés. Avec cet autre mode de réalisation, on transmet ainsi à la fois les informations nécessaires au calcul des coefficients de texture, qui ne seront extraits qu'au niveau du sous-ensemble de décodage et, bien entendu, toujours la partie correspondant au fond des images. Le coût de codage, dans ce cas, est de l'ordre de 0,5 bit/pixel. Là encore, comme dans le cas de la précédente réalisation, pour coder une séquence de plusieurs images, il suffit d'effectuer une seule fois le codage de type JPEG au cours du mouvement du personnage. Cette méthode permet en outre de transmettre toute l'image lors de la phase d'initialisation, c'est-à-dire une image du fond en même temps que les informations de texture.

En ce qui concerne les nouvelles coordonnées des noeuds du modèle, on pourrait transmettre et/ou stocker, en vue du décodage, ces coordonnées elles-mêmes. Il est cependant bien plus économique, en matière de débit de transmission, de considérer que les coordonnées d'origine des noeuds du modèle tridimensionnel sont déjà connues et stockées côté décodage, et de n'envoyer alors, pour transmission et/ou stockage, que les valeurs des différences entre ces coordonnées d'origine et les nouvelles valeurs calculées. En codant ces différences avec un nombre suffisant de bits, par exemple 6, on peut ainsi envisager des déplacements de noeud importants (64 pixels pour 6 bits). La calibration est réalisée pendant une période de temps limitée correspondant par exemple à un nombre déterminé d'images de la séquence. Cette période peut être définie par le commutateur 250 représenté sur la figure 1 et qui bascule du dispositif 200 vers le dispositif 300 après écoulement de cette période. A chaque position du commutateur 250 est associé un signal de mode qui doit être transmis en même temps que les autres données codées pour que le système de décodage puisse ultérieurement reconnaître la nature des signaux qui lui parviennent. Lorsque cette calibration initiale et le codage des informations de calibration sont achevés, comme indiqué plus haut, c'est le dispositif 300 qui va permettre la réactualisation desdites informations relatives au modèle tridimensionnel.

Ce dispositif 300, qui reçoit lui aussi (ici par l'intermédiaire du commutateur 250) les signaux numériques correspondant à la partie animée de la séquence d'images et sélectionnés ici par segmentation, comprend tout d'abord un circuit 301 de détermination du mouvement des points caractéristiques du modèle tridimensionnel précédemment construit, qui doit, à partir de ces informations de modèle, déterminer les translations et rotations du visage, afin de pouvoir ultérieurement ne coder que les paramètres qui permettront, au décodage, de trouver la position correcte du modèle tridimensionnel. Cette description de mouvement en trois dimensions implique de déterminer les mouvements en translation et en rotation du modèle, selon les six degrés de liberté représentés sur la figure 7, où les mouvements en translation sont repérés sur les axes $T_x$, $T_y$, $T_z$ et les mouvements en rotation par les angles $\varphi$, $\theta$, $\Psi$ par rapport à ces axes respectivement.

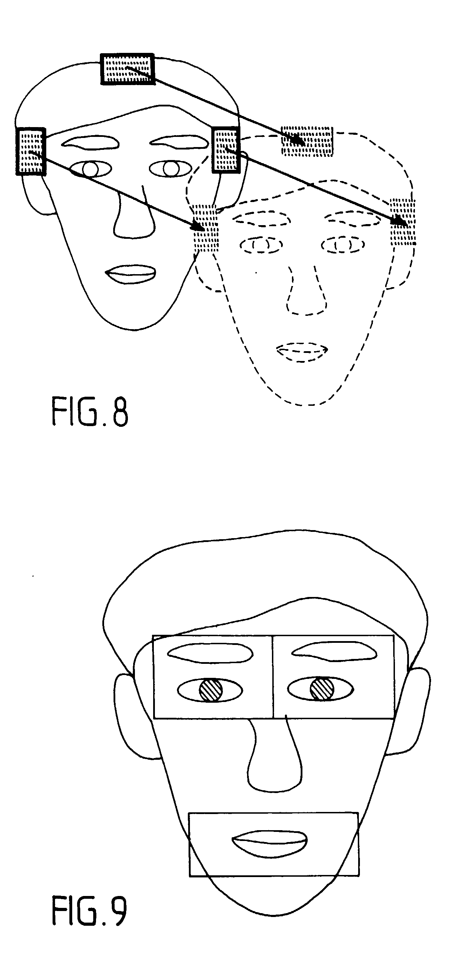

Pour déterminer les déplacements $dx_i$, $dy_i$ des différents points caractéristiques i par translation et rotation, on va suivre les déplacements de fenêtres définies en des zones caractéristiques du visage, comme indiqué sur la figure 8. En supposant que le personnage reste dans le même plan durant toute la séquence (pour éviter d'avoir à tenir compte de mouvements en profondeur), on recherche pour chaque fenêtre d'une image donnée, comme le montre ladite figure, celle des fenêtres qui lui ressemble le plus à l'intérieur d'une zone de recherche située dans l'image qui suit ladite image donnée, selon un critère de ressemblance qui est par exemple celui de la recherche du minimum de l'erreur absolue. Pour chaque point caractéristique i, les déplacements $dx_i$, $dy_i$ sont finalement donnés par les expressions :

$$dx_i = r(y_i).\cos\theta.d\theta + r(z_i).\cos\Psi.d\Psi + dTx$$

$$dy_i = r(x_i).\cos\varphi.d\varphi + r(z_i).\cos\Psi.d\Psi + dTy$$

où $r(x_i)$, $r(y_i)$, $r(z_i)$ désignent les rayons de rotation pour un point caractéristique i déterminé. En résolvant alors ce système d'égalités pour les différents points caractéristiques i, on obtient les paramètres $d\varphi(.), d\theta(.), d\Psi(.)$, et $dT(.)$, les angles absolus étant déjà connus à partir de l'image précédente. Cette extraction de paramètres permet de réactualiser le modèle tridimensionnel pour prendre en compte les modifications éventuelles de forme de la zone utile.

Cependant, et comme on l'a vu, il y a dans cette zone utile, dans le visage, des zones de forte expression faciale dont le rendu doit être le plus fidèle possible, à savoir par exemple celles de la bouche et de chaque oeil. Le codage ultérieur tiendra compte de ces zones dites d'intérêt particulier, qui peuvent être traitées indépendamment ou au contraire dans une seule fenêtre. On a choisi ici, comme indiqué sur la figure 9, de distinguer trois fenêtres séparées, pour chaque oeil et pour la bouche, en incluant éventuellement le nez et une partie des joues, mais le choix plus simple d'une seule fenêtre, ici limitée strictement aux yeux et à la bouche, est possible également. On décrira ci-après ces deux options, mises en oeuvre, dans l'un ou l'autre cas, par un circuit 302 dit de sélection de zones d'intérêt particulier et de détermination de leur mouvement.

Dans le cas d'une seule fenêtre, on retient, selon l'un ou l'autre des trois formats cités plus haut (CIF, QCIF, ou format 4/3), les coordonnées du coin supérieur gauche, notées $(x_G, y_G)$, et celles du coin inférieur droit $(x_D, y_D)$ de la fenêtre, ce qui donne ici par exemple :

(a) format 4/3 :

$$x_G = x_c \text{ (tempe gauche)} + \text{dist } x$$

$$y_G = y_c \text{ (oeil gauche)} - \text{dist } y_1$$

$$x_D = x_c \text{ (tempe droite)} - \text{dist } x$$

$$y_D = y_c \text{ (bouche)} + \text{dist } y_2$$

expressions dans lesquelles $x_c(.)$ et $y_c(.)$ désignent les coordonnées des points caractéristiques, et dist $x$, dist $y_1$, dist $y_2$ sont des valeurs qui permettent d'ajuster la taille de la fenêtre (pour ce format, on a choisi : dist $x$ = de 0 à 40 pixels, dist $y_1$ = 45, dist $y_2$ = 40).

(b) formats CIF et QCIF : même détermination que dans le cas maintenant examiné de trois fenêtres distinctes.

Dans le cas de trois fenêtres, les coordonnées, pour l'un ou l'autre des trois formats, sont déterminées comme suit :

(a) format 4/3 :

($a_1$) pour la bouche (BO), la fenêtre est définie à partir des points caractéristiques de la bouche et des coins des yeux, toutes les valeurs ci-après, telles que 20, 40, etc... correspondant à des exemples qui ont été testés et vérifiés :

$$x_G(BO) = x_c \text{ (oeil gauche, coin gauche)}$$

$$y_G(BO) = y_c \text{ (bas du nez)} + 20$$

$$x_D(BO) = x_c \text{ (oeil droit, coin droit)}$$

$$y_D(BO) = y_c \text{ (bouche, point inférieur)} + 40$$

($a_2$) pour l'oeil gauche (OG), la fenêtre est définie à partir des points caractéristiques des tempes et des yeux :

$$x_G(OG) = x_c \text{ (tempe gauche)} + 40$$

$$y_G(OG) = y_c \text{ (oeil gauche, coin gauche) - 35}$$

$$x_D(OG) = (x_c(\text{tempe gauche})+x_c(\text{tempe droite}))/2$$

$$y_D(OG) = y_c(\text{oeil gauche, coin gauche}) +35$$

($a_3$) pour l'oeil droit (OD), la fenêtre est définie également à partir des points caractéristiques des tempes et des yeux :

$$x_G(OD) = (x_c(\text{tempe gauche})+x_c(\text{tempe droite}))/2$$

$$y_G(OD) = y_c(\text{oeil droit, coin droit})-35$$

$$x_D(OD) = x_c(\text{tempe droite})-40$$

$$y_D(OD) = y_c(\text{oeil droit, coin droit})+35$$

(b) en format CIF, les coordonnées de fenêtre sont données par les égalités suivantes (dans lesquelles l'expression "fenêtre concernée" désigne respectivement la fenêtre bouche, oeil gauche, ou oeil droit), telles que définies ci-dessus pour le format 4/3 :

$$x_G(CIF) = (x_G(\text{fenêtre concernée})+19)/2$$

$$y_G(CIF) = (y_G(\text{fenêtre concernée})+32)/2$$

$$x_D(CIF) = (x_D(\text{fenêtre concernée})+19)/2$$

$$y_D(CIF) = (y_D(\text{fenêtre concernée})+32)/2$$

(c) en format QCIF, les coordonnées de fenêtre sont de façon similaire données par les égalités suivantes :

$$x_G(QCIF) = (x_G(\text{fenêtre concernée})+19)/4$$

$$y_G(QCIF) = (y_G(\text{fenêtre concernée})+32)/4$$

$$x_D(QCIF) = (x_D(\text{fenêtre concernée})+19)/4$$

$$y_D(QCIF) = (y_D(\text{fenêtre concernée})+32)/4$$

La taille de la ou des fenêtres ainsi définies est ensuite adaptée à un multiple MUL de la taille des blocs qui vont être utilisés pour le codage, en l'arrondissant par exemple au nombre entier de blocs immédiatement supérieur. Les valeurs $\Delta x$ et $\Delta y$ ainsi ajoutées à la taille réelle de la ou des fenêtres, comprises entre 0 et, au maximum, la taille d'un bloc ou d'un macrobloc, sont réparties uniformément des deux côtés de la fenêtre concernée, ce qui donne de nouvelles coordonnées $X_G$, $Y_G$, $X_D$, $Y_D$ :

$$X_G(\text{fen}) = x_G(\text{fen}) - \Delta x(\text{fen})$$

$$Y_G(\text{fen}) = y_G(\text{fen}) + \Delta y(\text{fen})$$

$$X_D(\text{fen}) = x_D(\text{fen}) + \Delta x(\text{fen})$$

$$Y_D(\text{fen}) = y_D(\text{fen}) - \Delta y(\text{fen})$$

Enfin, lorsque ces fenêtres sont en mouvement dans une séquence d'images, les coordonnées d'une fenêtre de la trame de rang N sont déduites des coordonnées de fenêtre définies dans la trame de rang (N-1) selon les expressions suivantes :

$$X_G(\text{fen}_N) = X_G(\text{fen}_{N-1}) - \text{DEPL}(x)_{N-1}$$

$$Y_G(\text{fen}_N) = Y_G(\text{fen}_{N-1}) - \text{DEPL}(y)_{N-1}$$

$$X_D(\text{fen}_N) = X_D(\text{fen}_{N-1}) - \text{DEPL}(x)_{N-1}$$

$$Y_D(\text{fen}_N) = Y_D(\text{fen}_{N-1}) - \text{DEPL}(y)_{N-1}$$

dans lesquelles $\text{DEPL}(x)_{N-1}$, $\text{DEPL}(y)_{N-1}$ représentent les composantes en x et en y du déplacement de la trame N par rapport à la trame (N-1).

La réactualisation des informations utiles est donc réalisée, après la calibration initiale, de la façon qui vient d'être décrite. Il reste, comme dans le cas de ladite calibration, à effectuer un codage, ici le codage des informations de réactualisation. Cette opération est réalisée dans le dispositif de codage 400 par un circuit 431 de codage des informations de sortie du circuit 301 de détermination du mouvement des points caractéristiques et par un circuit 432 de codage des informations de sortie du circuit 302 de sélection de zones d'intérêt particulier.

Le circuit 431 assure le codage, pour chaque point caractéristique, des paramètres calculés précédemment, à savoir : $d\theta$, $d\varphi$, $d\psi$, $dTx$, $dTy$, $\text{DEPL}(x)$, $\text{DEPL}(y)$. Ces paramètres sont par exemple codés sur 5 bits, suivant une séquence déterminée pour les retrouver toujours dans le même ordre. Si les points caractéristiques sont, comme on l'a vu, les tempes gauche et droite, l'oeil gauche et l'oeil droit, et le point inférieur du nez et de la bouche, l'ordre de grandeur du nombre de bits transmis est, dans l'exemple décrit, d'environ 95 bits par image.

Le circuit 432 assure, lui, le codage des informations présentes dans la ou les fenêtres englobant la ou les zones d'intérêt particulier (on décrira ci-après le circuit 432 en parlant plutôt d'une fenêtre, mais la généralisation au cas de plusieurs fenêtres trois fenêtres séparées, dans l'exemple cité précédemment - est immédiate). La position et la taille de la (de chaque) fenêtre étant bien définies, on stocke en mémoire la portion d'image originale inscrite dans ces fenêtres, en appelant FEN(i,j) chaque portion d'image composée de i lignes et de j colonnes, et l'on appelle image source cette portion d'image originale incluse dans la fenêtre et qui va maintenant être celle soumise au codage.

Le codage de cette image source est ici réalisé selon un mode de codage hybride, du type des standards MPEG et H261 (le standard MPEG - Moving Pictures Expert Group - et le standard H261, recommandé par le CCITT, sont mentionnés dans l'article déjà cité de la revue IEEE Spectrum), en ce sens qu'il combine un codage d'informations de même origine spatiale (ou codage intra) et un codage d'informations n'ayant pas la même origine spatiale (ici codage par prédiction). Dans le codage dit intra, les informations codées sont propres à une seule et même image, tandis que, dans le codage par prédiction, la prédiction est dite simple si le codage assure une compensation de mouvement unidirectionnelle à partir d'images antérieures à celle en cours de codage (c'est le cas des standards H261 et MPEG) ou bidirectionnelle si le codage assure une compensation de mouvement bidirectionnelle à partir d'images antérieure (s) et postérieure(s) à celle en cours de codage (c'est le cas du standard MPEG uniquement). Ce principe de codage de l'image source est bien adapté au codage des zones de forte expression faciale, qui sont les zones du visage les plus intéressantes mais subissant les déplacements les plus importants.

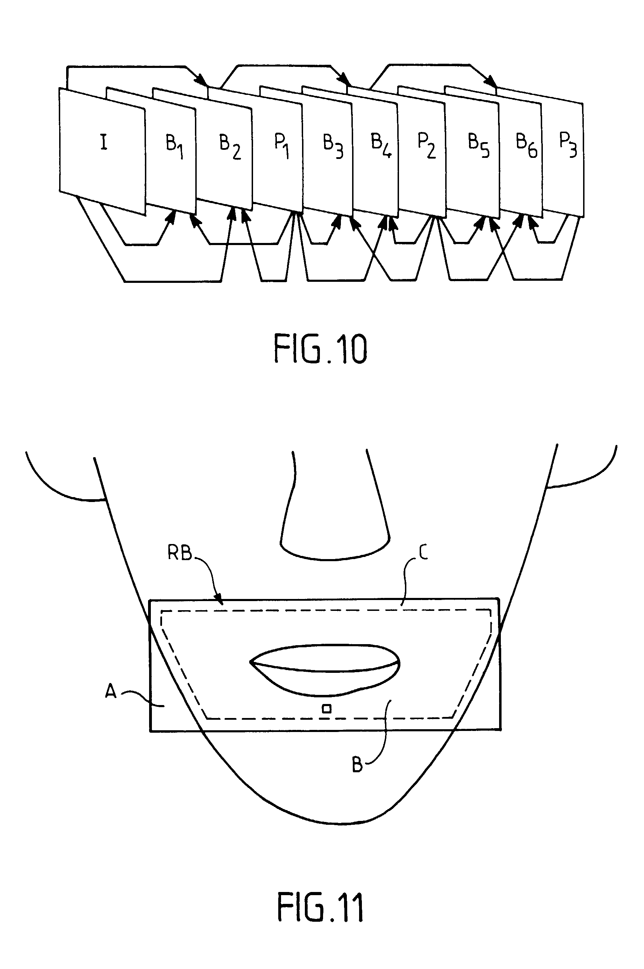

Pour ce codage d'images animées, il faut donc stocker en permanence, dans le cas d'un codage de type H261, les images originales de rang n et n-1, ou bien, dans le cas ici décrit d'un codage de type MPEG, les images originales de rang n(=image courante), n-1, n-2 et n-3, ce qui est réalisé dans le circuit 432. On considère en outre que le codage est effectué par groupes d'images, les groupes successifs constituant la séquence d'images résultant de la prise de vues d'origine. Chaque groupe d'images est lui-même constitué de plusieurs images, en nombre N compris par exemple entre 8 et 16, et débute toujours par une image codée en intra. La figure 10 montre pour N=10, un exemple d'un tel groupe, dans lequel les images $P_3$, $P_2$, $P_1$ sont déduites respectivement des images $P_2$, $P_1$ et I (image initiale codée en intra) par prédiction simple, et les images $B_1$ à $B_6$ sont déduites chacune d'une image antérieure et d'une image postérieure par prédiction bidirectionnelle ($B_1$ et $B_2$ sont déduites de I et $P_2$ ; $B_3$ et $B_4$ de $P_1$ et $P_2$ ; $B_5$ et $B_6$ de $P_2$ et $P_3$). Les flèches portées sur la figure 10 sont destinées à mettre en évidence ce mode de prédiction simple ou bidirectionnelle. Ces précisions étant données, on ne décrira pas davantage ce codage d'images animées, décrit, comme on vient de le rappeler, dans différents documents, notamment l'article "Video compression makes big gains" déjà cité (revue IEEE Spectrum, octobre 1991, vol.28, n°10, pp.16-19).

Ces codages spécifiques du modèle tridimensionnel en mouvement et des fenêtres d'intérêt particulier étant ainsi assurés par les circuits 431 et 432, il faut observer que les informations spécifiques codées sont d'origine différente : celles codées par le circuit 431 sont, à un instant donné, des informations de même origine spatiale (mise à jour périodique des coordonnées des points caractéristiques du modèle), tandis que celles codées par le circuit 432 sont, on l'a vu, d'origine plus complexe (images codées en intra, images obtenues par prédiction simple, images interpolées obtenues par prédiction bidirectionnelle). En outre, on observe que les luminances à l'intérieur et à l'extérieur des fenêtres ne coïncident pas nécessairement, en raison du choix des valeurs de luminance I(AMB) et I(INC) effectué pour la détermination de l'ombrage du modèle tridimensionnel. En effet, ce choix ne reflète pas nécessairement les caractéristiques d'éclairement présentes lors de la prise de vues, et la superposition telle quelle de la ou des fenêtres codées sur l'image de synthèse qui est obtenue à partir de l'adaptation des points caractéristiques du modèle tridimensionnel laisse apparaître, du fait de cette différence d'éclairement, la frontière entre les deux régions.

Pour éviter ce décalage de luminance entre l'image de synthèse et l'image dans les fenêtres, l'ensemble de codage et de décodage qui fait l'objet de la présente description prévoit de le corriger, et cette correction dans la ou les fenêtres concernées peut être effectuée soit dans le système de décodage d'images visiophoniques, soit dans le système de codage. Dans le premier cas, le dispositif de codage 400 n'a pas à prévoir ladite correction. Dans le second cas, le dispositif de codage 400 comprend un circuit 433 de correction de décalage de luminance qui opère comme suit.

Ce circuit 433 détermine d'abord la zone dite efficace qui est inscrite dans chaque fenêtre et qui contient réellement l'image de synthèse, afin d'exclure les parties de fenêtres qui dépasseraient éventuellement du visage lui-même (un exemple d'un tel dépassement, de part et d'autre de la bouche, est représenté sur la figure 9). On évite ainsi de prendre en compte une zone n'appartenant pas au visage et dont la luminance, très différente de celle des pixels du visage, fausserait les calculs ultérieurs. Cette zone efficace est ici délimitée en x et en y de la façon suivante :

(a) en x : du côté gauche, par une valeur d'abscisse notée x(MIN) et qui est égale soit à l'abscisse du côté gauche de la fenêtre considérée, soit, si la fenêtre déborde du visage, à l'abscisse du premier pixel non nul de l'image de synthèse en partant du bord gauche de cette fenêtre, et, du côté droit, par une valeur d'abscisse notée x(MAX) et qui, de façon similaire, est égale soit à l'abscisse du côté droit de la fenêtre considérée, soit, si la fenêtre déborde du visage, à l'abscisse du premier pixel non nul de l'image de synthèse en partant du bord droit de cette fenêtre ;
(b) en y : du côté supérieur, par une valeur d'ordonnée notée y(MAX) et qui est celle du bord supérieur de la fenêtre considérée et, du côté inférieur, par une valeur d'ordonnée notée y(MIN) et qui est celle du bord inférieur de la fenêtre.

Après la détermination de cette zone efficace, le circuit 433 calcule le décalage moyen de luminance entre l'image source dans la fenêtre considérée et l'image de synthèse. Ce calcul est effectué dans une petite zone, en général carrée, située pour chaque fenêtre dans une zone de luminance relativement uniforme aussi bien pour l'image de synthèse que pour l'image dans la fenêtre, en évitant donc les zones riches en contours ou en contraste telles que le voisinage immédiat des yeux et de la bouche (dans de telles zones, les images source et de synthèse sont très différentes et l'estimation d'un décalage de luminance global pour toute la fenêtre concernée n'aurait plus de signification).

La petite zone ici retenue est un carré de quelques pixels (2 pixels en format CIF ou QCIF, 5 pixels en format 4/3) situé en bas et au milieu de la fenêtre, position où la luminance est effectivement assez uniforme (voir les figures 11 à 13). La luminance moyenne, dans ce carré, de l'image source est notée I(SOURCE) et la luminance moyenne dans ce même carré mais considéré dans l'image de synthèse est notée I(SYNTH). La différence de ces luminances donne alors, pour la fenêtre considérée, le décalage moyen entre les deux images, noté OFFSET(f), selon l'expression suivante :

$$OFFSET(f) = [\sum_{1}^{n} (I(SOURCE) - I(SYNTH))]/n$$

dans laquelle n désigne le nombre de pixels dans la petite zone, ici carrée, considérée, et f se réfère à la fenêtre concernée. Le décalage moyen ainsi calculé est adopté pour toute cette fenêtre.

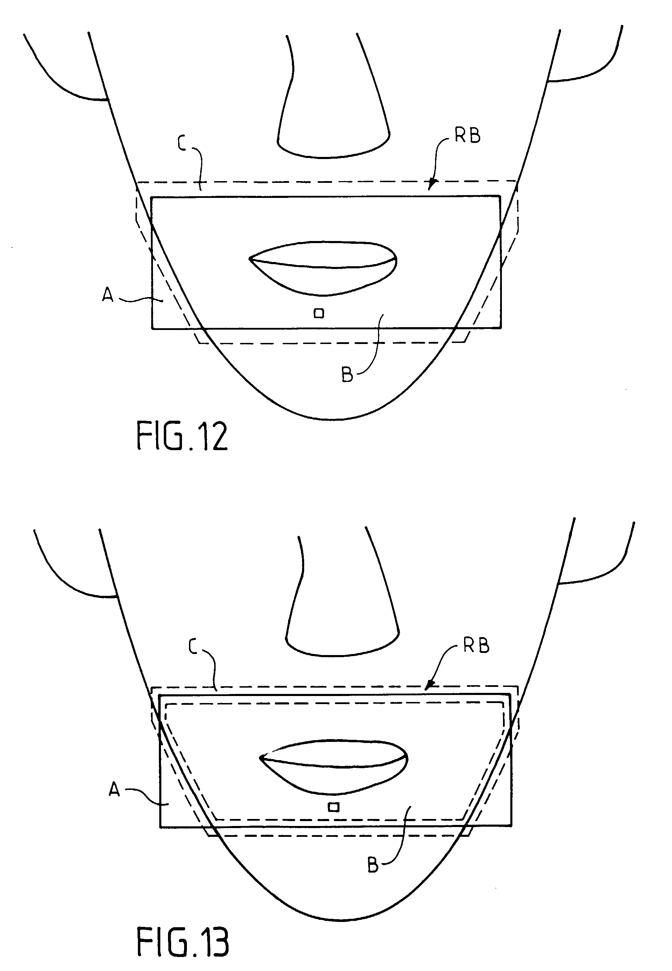

La correction de décalage de luminance à effectuer (par le circuit 433) peut alors être réalisée, en se référant aux figures 11 à 13 et à la description correspondante qui suit. On définit d'abord une région de bord RB, de largeur ici égale à quelques pixels (ici 5, 3, ou 10 pixels, selon qu'il s'agit du format CIF, QCIF, ou 4/3), qui court tout le long du bord de chaque fenêtre et qui constitue une zone de transition dans laquelle on va faire varier la luminance, ici de façon linéaire, en créant une sorte de dégradé. Cette zone de transition, est, dans l'exemple ici décrit, un ruban dont les bords sont parallèles à la frontière de la fenêtre, et qui est de préférence situé tout entier à l'intérieur de la fenêtre concernée, comme le montre la figure 11. Ce ruban peut cependant, aussi, être situé tout entier à l'extérieur de la fenêtre, comme le montre la figure 12, ou bien peut chevaucher la frontière de la fenêtre, comme le montre la figure 13.

Dans le premier cas, la luminance dans la fenêtre, après correction, est donnée par l'expression suivante :

$$I_1(FEN/CORR) = I(SOURCE)_{i,j} + VALCOR$$

expression dans laquelle :

- $I_1(FEN/CORR)$ désigne la valeur corrigée de la luminance ;
- $I(SOURCE)_{i,j}$ désigne la valeur de la luminance de l'image source au point de coordonnées (i,j) considéré dans ladite zone de transition ;
- VALCOR désigne la valeur correctrice du décalage, qui doit être considérée avec son signe (l'image de synthèse en dehors de la fenêtre peut être plus lumineuse ou moins lumineuse que l'image source), et qui prend différentes valeurs notées $VALCOR_1$, $VALCOR_2$, $VALCOR_3$ selon le point (i,j) considéré :

(a) hors de la zone du visage (zone A sur la figure 11), cette valeur est donnée en tout point par :

$$VALCOR_1 = I(SYNTH)_{i,j} - I(SOURCE)_{i,j}$$

(b) dans toute la zone de la fenêtre qui se trouve (zone B) à l'intérieur du bord intérieur de la zone de transition (excepté les points qui, éventuellement, sont déjà hors de la zone du visage et donc traités selon le cas (a) ci-dessus), cette valeur est constante et donnée par :

$$VALCOR_2 = OFFSET(f)$$

(c) entre ledit bord intérieur de la zone de transition et le bord de la fenêtre (zone C), la valeur $VALCOR_3$ varie linéairement entre ces deux valeurs $VALCOR_2$ et $VALCOR_1$.

En fait, les bords des fenêtres sont ici parallèles aux axes x, y définis, et ladite variation est dans ce cas une variation linéaire avec la seule coordonnée horizontale x lorsqu'on se trouve le long des frontières latérales gauche et droite de la fenêtre, ou une variation linéaire avec la seule coordonnée verticale y lorsqu'on se trouve le long des frontières latérales inférieure et supérieure de la fenêtre. Dans le deuxième cas (figure 12) ou dans le troisième cas (figure 13), c'est un calcul rigoureusement similaire qui permet de déterminer la valeur de correction à apporter à la luminance (les zones A, B, C sont définies de façon similaire). On précisera enfin que le décalage moyen OFFSET(f) ne varie en général que relativement peu d'une fenêtre à l'autre. Cette différence serait cependant perceptible et inesthétique sur l'image finalement reconstituée, et il est préférable de choisir une même valeur de décalage moyen pour chacune des fenêtres, en prenant leur moyenne par exemple, et en écartant éventuellement du calcul de cette moyenne l'une des valeurs de décalage moyen qui serait très différente des autres.

La correction de luminance étant ainsi effectuée, le circuit 432 du dispositif de codage 400 assure désormais, dans la ou les fenêtres, non plus le codage des valeurs de luminance de l'image source mais le codage de ces valeurs corrigées comme on vient de l'indiquer ci-dessus. Il reste alors à assurer, vers le canal CL de transmission et/ou de stockage représenté sur la figure 1, en sortie du dispositif de codage 400 une présentation séquentielle appropriée des informations codées, par exemple dans l'ordre suivant : signaux indiquant qu'on est en phase de calibration ou au contraire de réactualisation, paramètres de codage caractéristiques du modèle tridimensionnel, paramètres de codage spécifiques aux fenêtres, signal de fin d'image, etc... Une telle opération de présentation séquentielle, dite de formatage, est de type classique et ne sera pas davantage détaillée, des variations sensibles de présentation des données codées ne remettant en aucune manière en cause les principes de fonctionnement précédemment décrits.

Les moyens de codage décrits jusqu'à présent sont suffisants pour permettre ultérieurement, au décodage, une reconstitution d'image de qualité satisfaisante lorsque les visages de la séquence d'images sont vus de face ou sous de faibles angles. En effet, la correction de décalage de luminance à la frontière entre les deux zones de la partie utile des images gomme les discordances éventuelles de restitution d'image qui pourraient résulter de cette association de deux procédés de codage distincts à l'intérieur d'une même image.

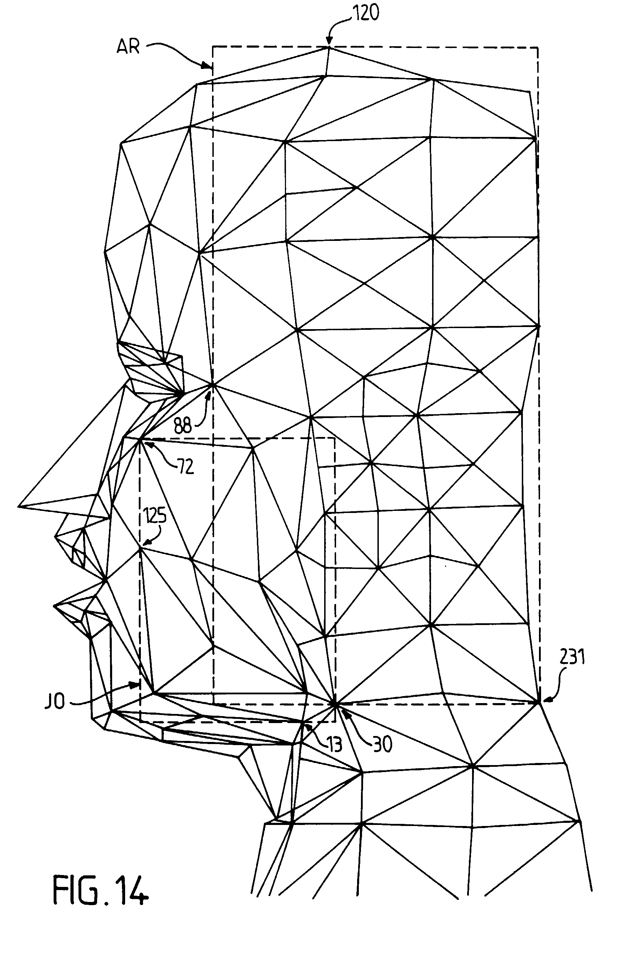

En revanche, une dégradation d'une autre partie de l'image peut être observée dans certaines circonstances : à la transition entre le fond fixe de l'image et le personnage animé de mouvement, le modèle tridimensionnel initialement calibré n'est plus assez précis pour s'adapter aux mouvements de ce personnage si celui-ci présente des rotations importantes de la tête, par exemple des rotations (autour d'un axe vertical) supérieures à 15 degrés à gauche ou à droite. Des facettes latérales, notamment, peuvent apparaître, celles qui incluent les oreilles, l'arrière de la tête, et la calibration initiale n'a pas pris en compte d'informations les concernant. Par ailleurs, certaines facettes situées sur les joues peuvent nécessiter l'envoi de nouvelles informations. La figure 14 montre plus particulièrement, sur le modèle tridimensionnel vu de profil, ces deux zones, la zone AR incluant les oreilles et les cheveux et la zone J0 incluant les joues.

Pour remédier à cette dégradation locale de qualité d'image, une opération de rafraîchissement peut être proposée, en précisant préalablement que ce rafraîchissement doit être effectué à une cadence qui établit un compromis entre la qualité d'image (supposant des rafraîchissements fréquents) et le volume de données à transmettre (qui doit être réduit au minimum en espaçant le plus possible ces rafraîchissements). On a vu précédemment que la calibration du modèle tridimensionnel avait consisté à réaliser, à partir des noeuds et facettes de ce modèle de base, un ajustement sur les images originales du début de séquence, complété par la mise en place d'un ombrage, et que l'image de synthèse pouvant ensuite être obtenue était alors définie, pour chaque facette du modèle, par le produit d'un coefficient de texture CT et de la valeur d'éclairement $I_{OMB}(F)$ propres à cette facette F, le coefficient de texture étant lui-même défini à partir de l'image originale vue de face. Cette définition de l'image de synthèse pour une facette F est résumée par l'expression suivante :

$$I(SYNTH)_F = I_{OMB}(F) \times CT(F)$$

et celle de CT(F) par l'expression suivante :

$$CT(F) = I(SOURCE)_F / I_{OMB}(F)$$

Les coefficients de texture correspondant aux facettes cachées ou à certaines facettes latérales qui sont profondément modifiées lors de fortes rotations du visage ne sont donc pas connus. Pour les déterminer, une reprise périodique de la calibration initiale pourrait être effectuée, mais on observe dans ce cas qu'il apparaît progressivement des discontinuités de luminance entre facettes voisines.

Le sous-ensemble de codage comprend alors, pour remédier à ce problème, un dispositif 500 de correction de calibration, représenté sur la figure 1 et comprenant lui-même d'une part des moyens 510 de détection d'écart de luminance (ou de chrominance respectivement) entre l'image de synthèse et l'image originale, d'autre part des moyens 520 de rafraîchissement de données selon les résultats de ladite détection; et enfin, dans le dispositif de codage 400, des moyens 530 de codage des nouvelles informations ainsi obtenues. Ces moyens 510 à 530 forment un bloc autonome qui n'est pas nécessairement prévu dans toutes les circonstances mais seulement dans le cas de l'application particulière signalée plus haut, pour remédier à la dégradation de qualité d'image observable dans le cadre de cette application.

Dans un premier mode de réalisation, les moyens de détection 510 comprennent un circuit de calcul de l'erreur moyenne entre l'image de synthèse et l'image originale. Cette erreur moyenne $ERR_M(.)$ est évaluée pour chaque image selon l'expression suivante :

$$ERR_M(ZC) = \sum_{1}^{N_F} \sum_{1}^{N_P} (I(SYNTH)_{F(i)} - I(SOURCE)_{F(i)})^2 / N_P$$

dans laquelle ZC indique la zone concernée (dans le cas présent, la zone AR ou la zone JO), $N_F$ le nombre de facettes dans cette zone, $N_P$ le nombre de pixels de la facette concernée F(i). Si aucun rafraîchissement n'était prévu, l'erreur moyenne augmenterait au fur et à mesure de l'apparition des facettes latérales et serait maximale lorsque ces facettes présenteraient la plus grande surface. La décision d'effectuer, ou non, un tel rafraîchissement est prise ici en comparant cette erreur moyenne à un seuil THRE5 : si l'erreur moyenne $ERR_M(ZC)$ lui est supérieure, le rafraîchissement a lieu pour cette zone, par un nouvel envoi de paramètres de texture. Lorsque cet envoi est terminé, l'erreur moyenne diminue, et un envoi ultérieur de nouveaux paramètres de texture ne redeviendra nécessaire que pour des rotations très supérieures. Le seuil THRE5 est ajusté en fonction du compromis souhaité entre la qualité d'image voulue et le volume des données à transmettre.

Dans un deuxième mode de réalisation, les moyens de détection 510 comprennent un circuit de détection angulaire : selon l'orientation des facettes du modèle par suite de la rotation (d'un angle θ) autour de l'axe vertical, on procède ou non au rafraîchissement. Pour les facettes du côté de la tête et des oreilles (zone AR), on constate en général qu'il faut au moins deux rafraîchissements, l'un pour un angle modéré, de l'ordre de 20° par exemple, l'autre pour un angle de 35° environ si l'on veut, dans le cas d'un visage, bien décrire la forme des oreilles. Les informations dans la zone J0 sont moins riches en contours et en textures et un seul rafraîchissement peut suffire, de l'ordre de 35°.

Dans un troisième mode de réalisation, les moyens de détection 510 comprennent un circuit de calcul du rapport, pour une facette donnée, entre le nombre de coefficients de texture déterminés par interpolation des valeurs initiales de ces coefficients de texture et le nombre de ces coefficients de texture initiaux, ou bien du rapport moyen ainsi établi pour la totalité des facettes dans une zone considérée (zone AR, ou zone J0).

La décision de correction de calibration, dite encore décision de rafraîchissement, étant ainsi prise, il faut assurer le codage de ces éventuelles informations de rafraîchissement. Ce codage est maintenant décrit, par exemple dans le cas où les coefficients de texture ne sont pas codés dans le sous-ensemble de codage mais redéfinis dans le sous-ensemble de décodage à partir du codage d'une partie de l'image originale (ou image source). Là encore, on peut distinguer par exemple le cas de la zone AR (oreilles + cheveux de l'arrière de la tête) et celui de la zone J0 (joues).

Pour la zone AR, on délimite la zone à rafraîchir par une fenêtre sensiblement rectangulaire, à l'intérieur de laquelle va être effectué un codage de type DCT. Les coordonnées de la fenêtre choisie sont définies par exemple, comme indiqué sur la figure 14, par les points extrêmes de la zone à rafraîchir, c'est-à-dire, dans le cas représenté, pour les points suivants :

- point extrême gauche $P_{EG}$ :

$$x_{EG} = x(88)$$

- point extrême supérieur $P_{ES}$ :

$$y_{ES} = y(120)$$

- point extrême droit $P_{ED}$ :

$$x_{ED} = x(231)$$

- point extrême inférieur $P_{EI}$ :

$$y_{EI} = y(231)$$

expressions dans lesquelles x(.), y(.) représentent l'abscisse ou l'ordonnée (respectivement) du point ayant sur la figure 14 le numéro indiqué entre parenthèse, parmi la totalité des noeuds du modèle qui sont tous ainsi numérotés (mais ces numéros des autres noeuds ne sont pas représentés, pour ne pas surcharger la figure).

La taille de la fenêtre ainsi définie est ensuite adaptée à un multiple de la taille des blocs (ici blocs de 8 x 8 pixels) utilisés pour le codage DCT, en l'arrondissant à un nombre entier de blocs, ici à l'entier supérieur comme précédemment. Le codage est alors effectué (codage de type JPEG, avec transformation DCT), un ordre de grandeur du coût de codage étant, pour les différents formats considérés dans la présente description, donné par le tableau suivant :

| $\Theta =$ | 15° | 30° |
|---|---|---|
| Avant codage : CIF (octets) | 4500 | 7400 |
| Avant codage : QCIF (octets) | 1150 | 1800 |
| Après codage : CIF (bits) | 1916 | 4400 |
| Après codage : QCIF (bits) | 1500 | 2340 |
| Temps de transmission : CIF(secondes) | 0,3 | 0,6 |
| Temps de transmission : QCIF(secondes) | 0,2 | 0,3 |

Les valeurs données ci-dessus sont bien entendu uniquement indicatives des essais effectués, le taux de codage sur les fenêtres CIF étant estimé à environ 0,6 bit/pixel et celui sur les fenêtres QCIF à environ 1,3 bit/pixel. Les valeurs de temps de transmission sont déterminées en admettant une cadence de transmission de 7 kilobits/seconde pour une image. Pour assurer rapidement cette transmission, on donne momentanément la priorité aux données de rafraîchissement en arrêtant de transmettre les bits de codage tant que dure ledit rafraîchissement et en rétablissant cette transmission après lui. Cette interruption de transmission touche un nombre d'images déterminé mais limité, par exemple six images, ce qui correspond à une interruption de l'ordre de 0,6 seconde. Bien entendu, on doit indiquer dans quelle phase on se trouve, et un paramètre indicateur de mode placé en tête des données fournit cette information, en prenant par exemple la valeur 1 si un rafraîchissement est en cours, ou la valeur 0 en l'absence de rafraîchissement ou lorsque celui-ci est terminé.

Pour la zone JO, on procède de manière similaire en délimitant également une fenêtre sensiblement rectangulaire déterminée, comme indiqué sur la figure 14, par les coordonnées de ses points extrêmes définies comme précédemment, à savoir par exemple ici :

- point extrême gauche $P_{EG}$ :

$$x_{EG} = x(125)$$

- point extrême supérieur $P_{ES}$ :

$$y_{ES} = y(72)$$

- point extrême droit $P_{ED}$ :

$$x_{ED} = x(30)$$

- point extrême inférieur $P_{EI}$ :

$$y_{EI} = y(13).$$

L'adaptation de taille de la fenêtre et son codage sont alors réalisés comme ci-dessus, une estimation indicative du coût de ce codage étant la suivante :

| $\Theta =$ | 15° | 30° |
|---|---|---|
| Avant codage : CIF (octets) | 3200 | 3800 |
| Avant codage : QCIF (octets) | 800 | 950 |
| Après codage : CIF (bits) | 1920 | 2270 |
| Après codage : QCIF (bits) | 1040 | 1230 |
| Temps de transmission : CIF(secondes) | 0,27 | 0,3 |

(suite)

| Temps de transmission : QCIF (secondes) | 0,15 | 0,17 |
|---|---|---|

Bien que plus réduits que dans le cas de la zone AR, les temps de transmission peuvent ici paraître encore assez importants alors que la luminance (ou la chrominance) sur les joues est relativement continue. On peut alors envisager de décrire l'intensité sur chaque facette par une interpolation linéaire entre les intensités aux trois sommets de la facette considérée. La luminance I(PIXEL) en un point quelconque de l'intérieur d'une facette est alors exprimée en fonction de sa position par rapport aux arêtes gauche et droite de la facette, selon une expression du type :

$$I(PIXEL) = a\,L + b\,R$$

dans laquelle a et b sont des coefficients, et L et R les intensités interpolées sur l'arête gauche et sur l'arête droite respectivement, ces intensités étant elles-mêmes liées aux trois intensités sur les extrémités des arêtes. Cette possibilité d'interpolation permet de ne coder et transmettre que les intensités desdites extrémités d'arêtes et conduit donc à une diminution très importante du coût de codage (si par exemple on interpole les intensités sur 15 facettes à partir des intensités sur 13 extrémités d'arête, le coût de codage est de 13 x 8 = 104 bits, pour 2000 bits en l'absence d'interpolation, soit un rapport de 20).

## Revendications

1. Dispositif d'analyse et de traitement d'une séquence d'images comprenant au moins un motif mobile sur un fond fixe ou quasi-fixe et disponibles sous la forme de signaux numériques correspondant aux informations de luminosité ou de couleurs des points d'image ou pixels, comprenant :

(1) des moyens de détermination de la silhouette constituée par la partie animée de ladite séquence, par calcul, à luminance du fond sensiblement égale, d'une différence de luminance entre l'image courante et au moins une image précédente et comparaison de cette différence à un seuil, en vue de la constitution d'une image binaire dont les deux valeurs de luminance possibles correspondant respectivement au fond de l'image et à sa zone utile sont l'une ou l'autre adoptées pour chaque pixel selon la valeur de ladite différence par rapport au seuil ;
(2) des moyens de suppression des irrégularités affectant éventuellement la zone utile ;
(3) des moyens de restitution d'une image de segmentation constituée d'un fond uniforme et de la représentation du motif extrait des images originales à l'aide desdits moyens de détermination de silhouette et desdits moyens de suppression d'irrégularités ;

caractérisé en ce que lesdits moyens de suppression des irrégularités affectant la zone utile comprennent, avant l'entrée desdits moyens de restitution d'image de segmentation, un circuit (103) de suppression d'irrégularités de contour par délimitation, sur chaque ligne balayée, du segment appartenant à ladite zone utile et d'uniformisation, à l'intérieur dudit segment, de la valeur de luminance à une valeur déterminée, ladite délimitation de segment étant effectuée en prévoyant une corrélation entre la délimitation de segment sur la ligne précédant la ligne courante et l'inclinaison, par rapport à cette ligne courante, du contour entre la zone utile et le fond de l'image.

2. Dispositif selon la revendication 1, caractérisé en ce que lesdits moyens de restitution d'image de segmentation comprennent un circuit (105) de substitution à ladite image binaire d'une image en nuances de gris ou de couleurs et sans fond et un circuit (106) de suppression des effets du mouvement intervenu entre la première des images prises dans ladite séquence d'images et l'image courante.

## Patentansprüche

1. Anordnung zum Analysieren und Behandeln einer Folge von Bildern, mit wenigstens einem beweglichen Motiv auf einem festen oder halbfesten Hintergrund, wobei diese Bilder in Form digitaler Signale verfügbar sind entsprechend Leuchtdichteoder Farbart-Informationen von Bildpunkten oder Pixeln, mit:

(1) Mitteln zur Determinierung der durch den bewegten Teil der genannten Folge gebildeten Silhouette, durch Berechnung, wobei die Leuchtdichte des Hintergrundes nahezu einheitlich ist, wobei es aber einen Unterschied in der Leuchtdichte zwischen dem aktuellen Bild und wenigstens einem vorhergehenden Bild gibt, und durch Vergleichung dieses Unterschiedes mit einer Schwelle, mit der Absicht der Bildung eines digitalen Bildes, dessen beide mögliche Leuchtdichtewerte, die dem Hintergrund des Bildes bzw. der Nutzzone entsprechen, für jedes Pixel abhängig von dem Wert der genannten Differenz in bezug auf die Schwelle angepaßt ist;

(2) Mitteln zum Unterdrücken von Unregelmäßigkeiten, welche die nützliche Zone beeinträchtigen können;

(3) Mitteln zum Wiederherstellen eines Segmentierungsbildes, gebildet durch einen einheitlichen Hintergrund und die Darstellung des Motivs, hergeleitet von den Originalbildern durch diese genannten Mittel zum Bestimmen einer Silhouette und durch die genannten Mittel zum Unterdrücken von Unregelmäßigkeiten, dadurch gekennzeichnet, daß die genannten Mittel zum Unterdrücken von Unregelmäßigkeiten, welche die nützliche Zone beeinträchtigen, stromaufwärts von dem Eingang der genannten Mittel zum Wiederherstellen des Segmentierungsbildes, eine Schaltungsanordnung (103) aufweisen zum Unterdrücken von Unregelmäßigkeiten in dem Umriß durch Eingrenzung an jeder abgetasteten Linie des Segmentes, das zu der genannten nützlichen Zone gehört und zum einheitlich Halten des Leuchtdichtewertes auf einem vor!5 bestimmten Wert innerhalb des genannten Segmentes, wobei diese Eingrenzung eines Segmentes dadurch durchgeführt wird, dass zwischen der Segmenteingrenzung der Linie vor der aktuellen Linie und der Neigung gegenüber dieser aktuellen Linie des Umrisses zwischen der nützlichen Zone und dem Hintergrund des Bildes eine Korrelation durchgeführt wird.

2. Anordnung nach Anspruch 1, dadurch gekennzeichnet, daß die genannten Mittel zum Wiederherstellen des Segmentierungsbildes eine Schaltungsanordnung (105) aufweisen zum Ersetzen eines Bildes in Graustufen oder Farbtönen und ohne Hintergrund für das genannte digitale Bild, sowie eine Schaltungsanordnung (106) zum Unterdrücken von Effekten jeglicher Bewegung, die zwischen dem ersten der Bilder in der genannten Folge von Bildern und dem aktuellen Bild stattfindet.

**Claims**

1. A device for analyzing and processing a sequence of images comprising at least a moving pattern against a fixed or quasi-fixed background and available in the form of digital signals corresponding to luminance or color information on pixels, comprising:

(1) means for determining a silhouette formed by the animated portion of said sequence, by means of calculation, at a background luminance which is substantially uniform, from a difference in luminance between the current image and at least one preceding image and by comparison of this difference with a threshold, so as to form a binary image of which either the one or the other of two possible luminance values, corresponding to the background of the image and to its useful zone, respectively, is adopted for each pixel in dependence on the value of said difference in relation to the threshold;

(2) means for suppressing irregularities which may affect the useful zone;

(3) means for restoring a segmentation image formed by a uniform background and the representation of the pattern derived from the original images by said means for determining a silhouette and said means for suppressing irregularities, characterized in that said means for suppressing irregularities which affect the useful zone comprise, upstream of the input of said means for restoring the segmentation image, a circuit (103) for suppressing irregularities in the contour through delimitation on each scanned line of the segment belonging to said useful zone and for rendering uniform the luminance value to a predetermined value inside said segment, said delimitation of a segment being effected by providing a correlation between the segment delimitation on the line preceding the current line and the inclination relative to this current line of the contour between the useful zone and the background of the image.

2. A device as claimed in claim 1, characterized in that said means for restoring the segmentation image comprise a circuit (105) for substituting an image in shades of grey or colors and without background for said binary image, and a circuit (106) for suppressing effects of any movement taking place between the first of the images taken in said sequence of images and the current image.

FIG. 1

FIG. 2

FIG.3

FIG.4

FIG. 5

FIG. 6

FIG.7

FIG.8

FIG.9

FIG.10

FIG.11

FIG.12

FIG.13

FIG.14